(19) Europäisches Patentamt
European Patent Office
Office européen des brevets

(11) **EP 2 806 290 A1**

(12) **EUROPEAN PATENT APPLICATION**

(43) Date of publication:
26.11.2014 Bulletin 2014/48

(51) Int Cl.:
**G01S 19/40** (2010.01)     **G01S 19/22** (2010.01)
**G01S 19/23** (2010.01)

(21) Application number: 14167701.3

(22) Date of filing: 09.05.2014

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: 24.05.2013 CN 201310199808
09.04.2014 US 201414248699

(71) Applicant: **O2 Micro, Inc.**
**Santa Clara, CA 95054 (US)**

(72) Inventor: **Gao, Ke**
**P.R.C.610041 Sichuan (CN)**

(74) Representative: **Lippert, Stachow & Partner**
**Patentanwälte**
**Postfach 30 02 08**
**51412 Bergisch Gladbach (DE)**

(54) **Systems and methods for estimating pseudorange errors**

(57) Methods and systems for estimating pseudorange error are described. A method for estimating a pseudorange error includes generating a plurality of coarse/acquisition (C/A) codes, including a first prompt C/A code corresponding to a satellite according to intermediate frequency (IF) signal data obtained from the satellite.. The method further includes determining autocorrelation values for each of the plurality of C/A codes with the IF signal data; obtaining a second prompt C/A code corresponding to a maximum autocorrelation of the autocorrelation values; and determining a pseudorange error based on the prompt C/A code, the second prompt C/A code, and the autocorrelation values. The plurality of C/A codes may include the first prompt C/A code, early C/A codes advanced relative to the first prompt C/A code, and late C/A codes delayed relative to the first prompt C/A code.

FIG. 1

**Description**

RELATED APPLICATION

The present application claims priority to Chinese Patent Application No. 201310199808.2, filed on May 24, 2013, with the State Intellectual Property Office in China.

BACKGROUND

During a global positioning system (GPS) positioning process, a local GPS system can measure an approximate distance from a satellite to the local GPS system. The approximate distance can be referred to as "pseudorange." In a wireless communication channel, a wave of a signal may travel from the satellite to the local GPS system through multiple different paths due to reflection/refraction effect. These paths can be referred to as "multipath." When the local GPS system successfully captures and tracks an intermediate frequency (IF) signal from the satellite, e.g., when a local coarse/acquisition (C/A) code is aligned with the data of the IF signal, the local GPS system can calculate a pseudorange from the satellite to the local GPS system based on the data of the IF signal. However, the calculated pseudorange includes errors caused by multipath effect.

SUMMARY

In one embodiment, a method for estimating a pseudorange error includes generating a plurality of coarse/acquisition (C/A) codes, in particular including a first prompt C/A code, corresponding to a satellite according to intermediate frequency (IF) signal data obtained from the satellite. The method further includes determining autocorrelation values for each of the plurality of C/A codes with the IF signal data. The method may include obtaining a second prompt C/A code corresponding to a maximum of the autocorrelation values; and determining a pseudorange error based on the first prompt C/A code, the second prompt C/A code, and the autocorrelation values. The method may include obtaining a first time-shifted value of a first prompt C/A code and a second time-shifted value of a second prompt C/A code corresponding to a maximum of the autocorrelation values; and determining a pseudorange error based on the first time-shifted value, the second time-shifted value, and the autocorrelation values. The multiple C/A codes may include the first prompt C/A code, a set of early C/A codes advanced relative to the first prompt C/A code, and a set of late C/A codes delayed relative to the first prompt C/A code. The method may comprise determining the first prompt C/A code using a loop tracking module. A time span between adjacent C/A codes of the plurality of C/A codes may comprise at least one clock period. The plurality of C/A codes may comprise the first prompt C/A code, a set of early C/A codes advanced relative to the first prompt C/A code, and a set of late C/A codes delayed relative to the first prompt C/A code. Determining the pseudorange error may comprise selecting, from the plurality of C/A codes, at least one early fitting C/A code advanced relative to the second prompt C/A code and at least one late fitting C/A code delayed relative to the second prompt C/A code; obtaining a plurality of parameters based on the second time-shifted value, the maximum of the autocorrelation values, a time-shifted value of the at least one early fitting C/A code, an autocorrelation value corresponding to the at least one early fitting C/A code, a time-shifted value of the at least one late fitting C/A code, and an autocorrelation value corresponding to the at least one late fitting C/A code, wherein the parameters may indicate a relationship between an autocorrelation value and a time-shifted value; obtaining a calculated time-shifted value, corresponding to a maximum value of a curvilinear function that is determined by the parameters; and determining the pseudorange error based on a time difference between the calculated time-shifted value and the first time-shifted value. A time span between adjacent C/A codes of the at least one early fitting C/A code, the second prompt C/A code, and the at least one late fitting C/A codes may comprise at least one clock period. The curvilinear function may comprise a parabolic function. Adjacent C/A codes of the at least one early fitting C/A code, the second prompt C/A code, and the at least one late fitting C/A code, which may be used for determining the parabolic function, may have the same time span therebetween. The time difference may be determined by calculating a first time difference between the second time-shifted value and the first time-shifted value; calculating a second time difference between the calculated time-shifted value and the second time-shifted value; and adding the first time difference and the second time difference to obtain the time difference indicative of the pseudorange error.

In another embodiment, a pseudorange error estimating system includes an autocorrelation value generating circuit and an error estimating circuit. The autocorrelation value generating circuit generates a plurality of C/A codes, in particular including a first prompt C/A code, corresponding to a satellite according to IF signal data obtained from the satellite, and determines autocorrelation values for each of the plurality of C/A codes with the IF signal data. The error estimating circuit may obtain the first prompt C/A code and a second prompt C/A code that is corresponding to a maximum of the autocorrelation values, and may determine a pseudorange error based on the first prompt C/A code, the second prompt C/A code, and the autocorrelation values. The error estimating circuit may obtain a first time- shifted value of a first prompt C/A code and a second time-shifted value of a second prompt C/A code corresponding to maximum of the autocorrelation values, and may estimate a pseudorange error based on the first time-shifted value, the second time-shifted value, and the autocorrelation values. The C/A codes may include the first prompt C/A code, a set of early C/A codes advanced relative to the first prompt C/A code, and a set of late C/A codes delayed relative to the first prompt C/A code. The autocorrelation value generating circuit may perform autocorrelation function calculation on the plurality of C/A codes with the same IF signal data to generate the autocorrelation values. The pseudorange error estimating system may comprise a loop tracking module operable for determining the first prompt C/A code. The time span between adjacent C/A codes of the plurality of C/A codes may comprise at least one clock period. The error estimating circuit may be operable for selecting, from the plurality of C/A codes, at least one early fitting C/A code advanced relative to the second prompt C/A code and at least one late fitting C/A code delayed relative to the second prompt C/A code; obtaining a plurality of parameters based on the second time-shifted value, the maximum of the autocorrelation values, a time-shifted value of the at least one early fitting C/A code, an autocorrelation value corresponding to the at least one early fitting C/A code, a time-shifted value of the at least one late C/A code, and an autocorrelation value corresponding to the at least one late fitting C/A code, wherein the parameters may indicate a relationship between an autocorrelation value and a time-shifted value; obtaining a calculated time-shifted value, corresponding to a maximum value of a curvilinear function that is determined by the parameters; and determining the pseudorange error based on a time difference between the calculated time-shifted value and the first time-shifted value. A time span between adjacent C/A codes of the at least one early fitting C/A code, the second prompt C/A code, and the at least one late fitting C/A codes may comprise at least one clock period. The curvilinear function may comprise a parabolic function, wherein adjacent C/A codes of the at least one early fitting C/A code, the second prompt C/A code, and the at least one late fitting C/A code, used for determining the parabolic function, may have the same time span therebetween. The error estimating circuit may be operable for calculating a first time difference between the second time-shifted and the first time-shifted value; calculating a second time difference between the calculated time-shifted and the second time-shifted value; and adding the first time difference and the second time difference to obtain the time difference indicative of the pseudorange error.

In yet another embodiment, a pseudorange measuring device includes an error estimating system, in particular according to the invention, and a pseudorange calculating system. The error estimating system may generate a plurality of C/A codes, in particular including a first prompt C/A code corresponding to a satellite according to IF signal data obtained from the satellite. The error estimating system may also determine autocorrelation values for each of the plurality of C/A codes with the IF signal data, may obtain a second prompt C/A code corresponding to a maximum of the autocorrelation values, and may determine a pseudorange error according to a first prompt C/A code, the second prompt C/A code, and the autocorrelation values. The pseudorange calculating system calculates a rough value of a pseudorange, and eliminates the pseudorange error from the rough value of the pseudorange to obtain a calibrated value of the pseudorange. The C/A codes may include the first prompt C/A code, a set of early C/A codes advanced relative to the first prompt C/A code, and a set of late C/A codes delayed relative to the first prompt C/A code. The error estimating system may be operable for selecting at least one early fitting C/A code advanced relative to the second prompt C/A code and at least one late fitting C/A code delayed relative to the second prompt C/A code; obtaining a plurality of parameters based on a second time-shifted value of the second prompt C/A code, the maximum of the autocorrelation values corresponding to the second prompt C/A code, a time-shifted value of the at least one early fitting C/A code, an autocorrelation value corresponding to the at least one early fitting C/A code, a time-shifted value of the at least one late C/A code, and an autocorrelation value corresponding to the at least one late fitting C/A code, wherein the parameters may indicate a relationship between an autocorrelation value and a time-shifted value; obtaining a calculated time-shifted value, corresponding to a maximum value of a curvilinear function that is determined by the parameters; and determining the pseudorange error based on a time difference between the calculated time-shifted value and a first time-shifted value of the first prompt C/A code. The curvilinear function may comprise a parabolic function, wherein adjacent C/A codes of the at least one early fitting C/A code, the second prompt C/A code, and the at least one late fitting C/A code, used for determining the parabolic function, may have the same time span therebetween. Further, the error estimating system may be operable for calculating a first time difference between the second time-shifted and the first time-shifted value; calculating a second time difference between the calculated time-shifted and the second time-shifted value; and adding the first time difference and the second time difference to obtain the time difference indicative of the pseudorange error.

Additional benefits and novel features will be set forth in part in the description which follows, and in part will become apparent to those skilled in the art upon examination of the following and the accompanying drawings or may be learned by production or operation of the disclosed embodiments. The benefits of the present embodiments may be realized and attained by practice or use of various aspects of the methodologies, instrumentalities and combinations set forth in the detailed description set forth below.

BRIEF DESCRIPTION OF THE DRAWINGS

Features and benefits of embodiments of the claimed subject matter will become apparent as the following detailed description proceeds, and upon reference to the drawings, wherein like numerals depict like parts. These exemplary embodiments are described in detail with reference to the drawings. These embodiments are non-limiting exemplary embodiments, in which like reference numerals represent similar structures throughout the several views of the drawings.

FIG. 1 illustrates a block diagram of an example of a pseudorange measuring device, in accordance with one embodiment of the present teaching.

FIG. 2 illustrates a block diagram of an example of a pseudorange error estimating system, in accordance with one embodiment of the present teaching.

FIG. 3 illustrates examples of combinations of IF signal data and C/A codes used for autocorrelation function calculation to calculate a time difference, in accordance with one embodiment of the present teaching.

FIG. 4 illustrates examples of relationship diagrams between autocorrelation values and time values on a chip time axis, in accordance with one embodiment of the present teaching.

FIG. 5 illustrates a block diagram of an example of an error estimating circuit, in accordance with one embodiment of the present teaching.

FIG. 6 illustrates a flowchart of examples of operations performed by a pseudorange error estimating system, in accordance with one embodiment of the present teaching.

DETAILED DESCRIPTION

Reference will now be made in detail to the embodiments of the present teaching. While the present teaching will be described in conjunction with these embodiments, it will be understood that they are not intended to limit the present teaching to these embodiments. On the contrary, the present teaching is intended to cover alternatives, modifications and equivalents, which may be included within the spirit and scope of the present teaching as defined by the appended claims.

Furthermore, in the following detailed description of the present teaching, numerous specific details are set forth. However, it will be recognized by one of ordinary skill in the art that the present teaching may be practiced without these specific details. In other instances, well known methods, procedures, components, and circuit have not been described in detail for not obscuring aspects of the present teaching.

Some of the following portions of the detailed descriptions are presented in terms of procedures, logic blocks, processing and other symbolic representations of operations on data bits within a computer memory. These descriptions and representations are commonly used by those skilled in the data processing arts to convey the substance of their work to others skilled in the art. In the present application, a procedure, logic block, process, or the like, is conceived to be a self-consistent sequence of operations or instructions leading to a result. The operations are those requiring manipulations of components and/or data of quantities and/or qualities. Usually, although not necessarily, data take the form of electrical or magnetic signals capable of being stored, transferred, combined, compared, and otherwise manipulated in a computer system.

It should be noted that all of these and similar terms are merely convenient labels applied to the components and/or data associated therewith. Unless specifically stated otherwise as apparent from the following discussions, it is appreciated that throughout the present application, discussions utilizing the terms such as "generating," "performing," "obtaining," "calculating," "determining," "selecting," "estimating," "adding" or the like, refer to the actions and processes of a machine , e.g., a computer system, or a similar electronic computing device, that manipulates and transforms data represented as physical (electronic) and/or non-physical quantities within the computer system's registers and memories into other data similarly represented as physical quantities within the computer system memories or registers or other such information storage, transmission or display devices.

For example, machine-readable media may comprise storage media and communication media. Storage media includes, but is not limited to, volatile and nonvolatile, removable and non-removable media implemented in any method or technology for storage of information such as machine-readable instructions, data structures, program modules or other data. Storage media includes, but is not limited to, random access memory (RAM), read only memory (ROM), electrically erasable programmable ROM (EEPROM), flash memory or other memory technology, compact disk ROM (CD-ROM), digital versatile disks (DVDs) or other optical storage, magnetic cassettes, magnetic tape, magnetic disk storage or other magnetic storage devices, or any other medium that can be used to store the desired information.

Communication media can embody machine-readable instructions, data structures, program modules or other data and include any information delivery media. For example, and not limitation, communication media includes wired media such as a wired network or direct-wired connection, and wireless media such as acoustic, radio frequency (RF), infrared and other wireless media. Combinations of any of the above should also be included within the scope of machine-readable media.

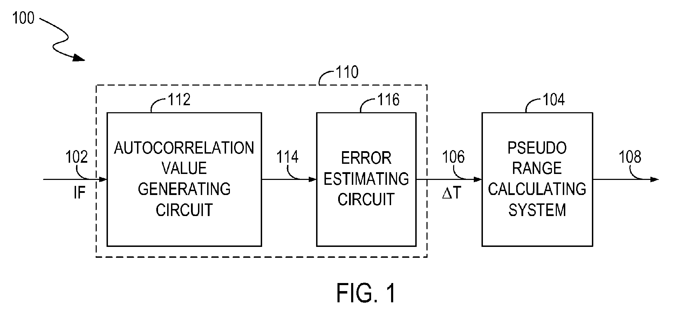

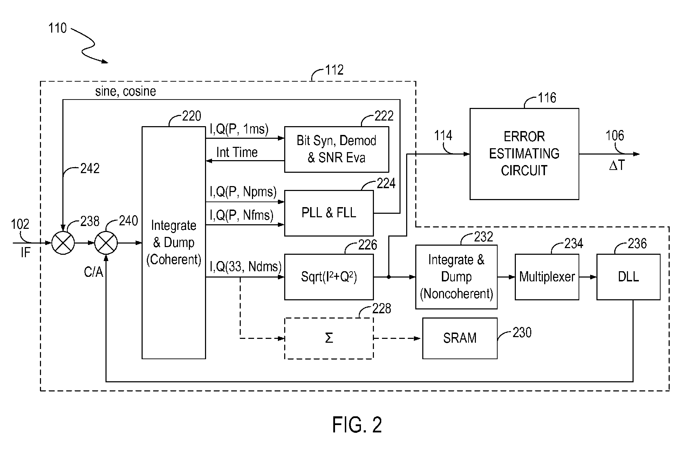

FIG. 1 illustrates a block diagram of an example of a pseudorange measuring device 100, in accordance with one embodiment of the present teaching. In an embodiment, the pseudorange measuring device 100 can be installed in a local GPS system. The pseudorange measuring device 100 includes an error estimating system 110 and a pseudorange calculating system 104 coupled to the error estimating system 110. The error estimating system 110, e.g., including a loop tracking module, can receive intermediate frequency (IF) signals 102 from multiple satellites, obtain IF signal data of the satellites from the IF signals 102, and calculate a time difference 106 indicative of a pseudorange error according to the IF signal data. The pseudorange calculating system 104 can roughly calculate a pseudorange from a satellite to the local GPS system to obtain a rough value of the pseudorange using methods such as capturing base-band and tracking loop. The pseudorange calculating system 104 can also estimate a pseudorange error according to the time difference 106, e.g., by multiplying the time difference 106 with a signal travel speed, and eliminate the pseudorange error from the rough value of the pseudorange so as to obtain a calibrated value 108 of the pseudorange. The signal travel speed can be a speed at which GPS signals travel between the satellite and the local GPS system, e.g., a speed of light or a speed determined by the speed of light and associated factors such as aerosphere, koniology, and air humidity. By way of example, the error estimating system 110 includes an autocorrelation value generating circuit 112 and an error estimating circuit 116 coupled to the autocorrelation value generating circuit 112. The autocorrelation value generating circuit 112 can determine, according to the IF signal data, that the IF signals 102 includes a signal from a satellite of the multiple satellites, generate a set of coarse/acquisition (C/A) codes corresponding to the satellite, and perform autocorrelation function calculation to the C/A codes based on the IF signal data to calculate/obtain/generate a set of autocorrelation values 114. The autocorrelation function calculation will be described in combination with FIG. 2. The error estimating circuit 116 can further calculate a time difference 106 indicative of a pseudorange error according to the autocorrelation values 114. As a result, the pseudorange calculating system 104 can calibrate the roughly calculated pseudorange according to the calculated pseudorange error to generate a calibrated pseudorange 108.

In the example of FIG. 1, the error estimating circuit 116 provides the calculated time difference 106 to the pseudorange calculating system 104, and then the pseudorange calculating system 104 calculates a pseudorange error according to the time difference 106 and eliminates the error from the roughly calculated pseudorange. However, the present teaching is not so limited. In another embodiment, the error estimating circuit 116 calculates/estimates a pseudorange error by multiplying the calculated time difference 106 with the above mentioned signal travel speed, and provides the pseudorange error to the pseudorange calculating system 104. Accordingly, the pseudorange calculating system 104 calibrates the roughly calculated pseudorange according to the pseudorange error.

FIG. 2 illustrates a block diagram of an example of the error estimating system 110, in accordance with one embodiment of the present teaching. FIG. 2 is described in combination with FIG. 1, FIG. 3 and FIG. 4. In an embodiment, the autocorrelation value generating circuit 112 can be a loop tracking module having a structure shown in FIG. 2. However, in another embodiment, the autocorrelation value generating circuit 112 can have a different structure. As shown in FIG. 2, the autocorrelation value generating circuit 112, e.g., a signal look tracking module, includes a multiplier 238, a multiplier 240, a coherent integrate-and-dump circuit 220, a bit synchronization demodulation and signal-to-noise ratio evaluation circuit 222, a phase-locked loop and frequency-locked loop circuit 224, a modulo circuit 226, a one bit period accumulator 228, a static random-access memory 230, a noncoherent integrate-and-dump circuit 232, a multiplexer 234, and a delay-locked loop (DLL) circuit 236.

In an embodiment, the autocorrelation value generating circuit 112, e.g., a loop tracking module, receives an IF signal 102, extracts a piece of data, e.g., of a navigation bit period, from the IF signal 102, and stores the piece of IF signal data. The autocorrelation value generating circuit 112 performs autocorrelation function calculation based on the stored IF signal data and a set of shifted C/A codes generated by the DLL circuit 236. By way of example, the autocorrelation value generating circuit 112 multiplies the stored IF signal data with a local carrier signal 242 (including two orthogonal signals: a sine signal and a cosine signal) to generate a multiplication result, and performs the inner product (or dot product) of the multiplication result with each of the shifted C/A codes from the DLL circuit 236 to generate an inner product result that includes an in-phase component I and a quadrature component Q. For instance, the coherent integrate-and-dump circuit 220 generates an inner product result that includes an in-phase component I and a quadrature component Q, and provides the in-phase component I and the quadrature component Q to the modulo circuit 226. The modulo circuit 226 performs modulo operation on the in-phase component I and the quadrature component Q to generate an autocorrelation value 114, e.g., given by $(\sqrt{I^2 + Q^2})$.

As mentioned above, the DLL circuit 236 can generate a set of shifted C/A codes used for autocorrelation function calculation with the IF signal data. The shifted C/A codes include a first prompt C/A code P, multiple early C/A

codes $E_1$, $E_2$, ..., $E_{N1}$ advanced relative to the first prompt C/A code P, and multiple late C/A codes $L_1$, $L_2$, ..., $L_{N2}$ delayed relative to the first prompt C/A code P, wherein N1 and N2 are positive integers. In an embodiment, the autocorrelation value generating circuit 112, e.g., a loop tracking module, determines a C/A code that is aligned with the IF signal data by tracking the data in the IF signal 102, and this C/A code can be referred to as a "first prompt C/A code P." In an embodiment, a time span between adjacent C/A codes of the early C/A codes $E_1$, $E_2$, ..., $E_{N1}$, the first prompt C/A code P, and the late C/A codes $L_1$, $L_2$, ..., $L_{N2}$ includes one or more local clock periods. The local clock period can be a sampling clock period at which the IF signal data is sampled. The autocorrelation value generating circuit 112 performs autocorrelation function calculation on the early C/A codes $E_1$, $E_2$, ..., $E_{N1}$, the first prompt C/A code P, and the late C/A codes $L_1$, $L_2$, ..., $L_{N2}$ respectively with the IF signal data to calculate/obtain/generate a set of autocorrelation values 114.

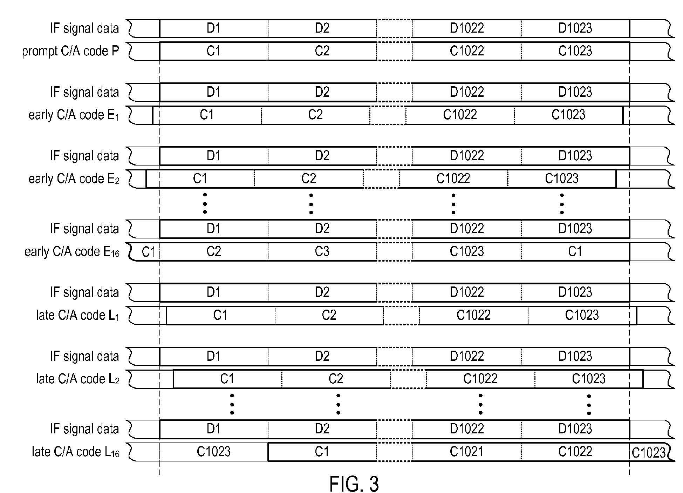

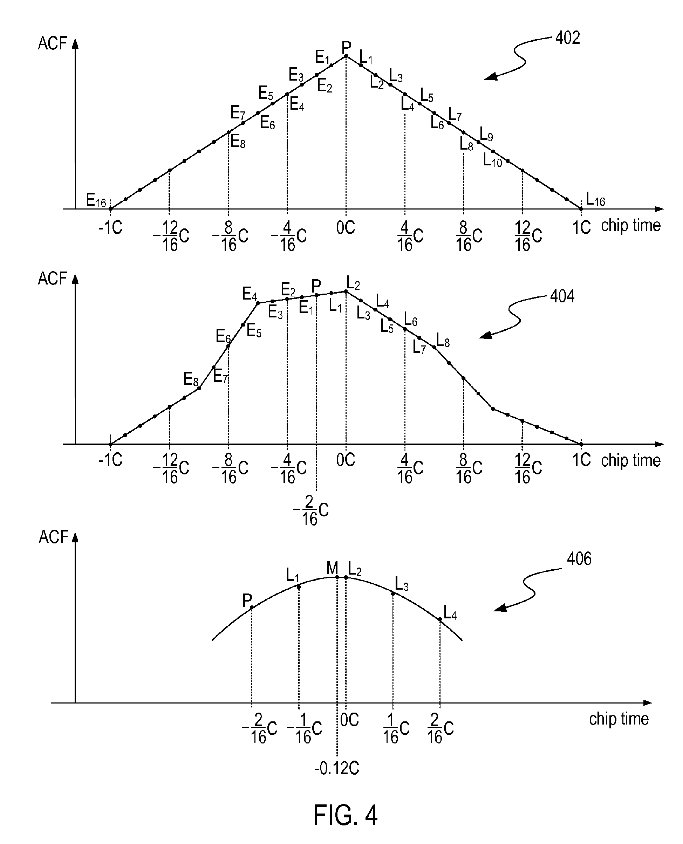

FIG. 3 illustrates examples of combinations of the IF signal data and the C/A codes P, $E_1$, $E_2$, ..., $E_{16}$, $L_1$, $L_2$, ..., $L_{16}$, used for autocorrelation function calculation to calculate a time difference 106 indicative of a pseudorange error, in accordance with one embodiment of the present teaching. FIG. 3 is described in combination with FIG. 2 and FIG. 4.

In the example of FIG. 3, a C/A code includes 1023 chips C1, C2, ..., C1023. In an embodiment, a time period for one chip (hereinafter, chip time unit) is determined by a satellite signal transmitter. For instance, a chip time unit can be approximately $1 \times 10^{-6}/1.23$ seconds. The number of sampling points, e.g., the number of data bits, in each chip is determined by a sampling frequency of a local clock. For example, a sampling frequency of a local clock can be, but not necessarily, 16.3676MHz, and therefore each chip includes approximately 16 sampling points of the local clock.

By reference to FIG. 3 and FIG. 4, the early C/A code $E_1$ is shifted by a time value of (-1/16)C, e.g., advanced by one sixteenth of a chip time unit or advanced by a data bit, relative to the first prompt C/A code P, where C represents a chip time unit. In plot 404 of FIG. 4, a dot labeled "$E_1$" represents an autocorrelation value of the early C/A code $E_1$ and the IF signal data. The early C/A code $E_2$ is shifted by a time value of (-2/16)C, e.g., advanced by two sixteenth of a chip time unit or advanced by two data bits, relative to the first prompt C/A code P, and a dot labeled "$E_2$" in the plot 404 represents an autocorrelation value of the early C/A code $E_2$ and the IF signal data. The remaining early C/A codes $E_3$, ..., $E_{16}$ are shifted in a similar manner, and their corresponding autocorrelation values are represented by dots labeled "$E_3$," ..., "$E_{16}$" in the plot 404, respectively. Similarly, the late C/A code $L_1$ is shifted by a time value of (1/16)C, e.g., delayed by one sixteenth of a chip time unit or delayed by a data bit, relative to the first prompt C/A code P, and a dot labeled "$L_1$" in the plot 404 represents an autocorrelation value of the late C/A code $L_1$ and the IF signal data. The late C/A code $L_2$ is shifted by a time value of (2/16)C, e.g., delayed by two sixteenth of a chip time unit or delayed by two data bits, relative to the first prompt C/A code P, and a dot labeled "$L_2$" in the plot 404 represents an autocorrelation value of the late C/A code $L_2$ and the IF signal data. The remaining late C/A codes $L_3$, ..., $L_{16}$ are shifted in a similar manner, and their corresponding autocorrelation values are represented by dots labeled "$L_3$," ..., "$L_{16}$" in the plot 404, respectively. The autocorrelation value generating circuit 112 performs autocorrelation function calculation on the first prompt C/A code P, the early C/A codes $E_1$, $E_2$, ..., $E_{N1}$, and the late C/A codes $L_1$, $L_2$, ..., $L_{N2}$ respectively with the same piece of IF signal data, e.g., stored in the autocorrelation value generating circuit 112, to calculate/obtain/generate a set of autocorrelation values 114.

Thus, the error estimating circuit 116 can receive the autocorrelation values 114, and perform curve fitting to create a relationship curve representing a relationship between the autocorrelation values 114 and time-shifted values of the C/A codes. The error estimating circuit 116 can further calculate a time difference 106 representing a pseudorange error according to the relationship curve. The structure of the autocorrelation value generating circuit 112, e.g., a loop tracking module, does not need to be changed in order for the calculation of the time difference 106, which simplifies the structure of the error estimating system 110 and reduces the cost thereof. The curve fitting process is described by reference to FIG. 4 in combination with FIG. 2 and FIG. 3.

FIG. 4 illustrates examples of relationship diagrams between the autocorrelation values 114 and time-shifted values on a chip time axis, in accordance with one embodiment of the present teaching. FIG. 4 is described in combination with FIG. 2 and FIG. 3. In FIG. 4, the horizontal axes in plots 402, 404 and 406 are chip time axes, and a time value on a chip time axis represents a time-shifted value of a corresponding C/A code. The vertical axes in plots 402, 404 and 406 are autocorrelation function (ACF) axes, and a value on an ACF axis represents an autocorrelation value of a corresponding C/A code and the IF signal data. Plot 402 shows an example of a relationship curve of autocorrelation values and the time values on the chip time axis, in an ideal situation, e.g., there is no multipath interference when the local GPS system is searching signals. As shown in the plot 402, in the ideal situation, the autocorrelation value of the first prompt C/A code P and the IF signal data is the maximum value among all the autocorrelation values, and the time-shifted value of the first prompt C/A code P on the chip time axis is 0C. Plot 404 shows an example of a relationship curve of autocorrelation values and the time values on the chip time axis, in a practical situation, e.g., there is multipath interference when the local GPS system is searching signals. As shown in plot 404, due to the effect of multipath interference, there is a time deviation between the first prompt C/A code P, e.g., at (-2/16)C, and a C/A code, e.g., at 0C, corresponding to a maximum autocorrelation value obtained by performing the above mentioned autocorrelation function calculation. Plot 406 represents a curvilinear function, e.g., a parabolic function, indicative of the relationship between the autocorrelation values 114 and the time values on the chip time axis, which is obtained by a fitting method performed by the error estimating circuit 116. Other curvilinear functions are also contemplated.

In an embodiment, the DLL circuit 236 generates early C/A codes $E_1$, $E_2$, ..., $E_{16}$, advanced relative to the first prompt C/A code P on the chip time axis, and generates late C/A codes $L_1$, $L_2$, ..., $L_{16}$, delayed relative to the first prompt C/A code P on the chip time axis. The autocorrelation value generating circuit 112 performs autocorrelation function calculation on the IF signal data of the IF signal 102 with the C/A codes P, $E_1$, $E_2$, ..., $E_{16}$, $L_1$, $L_2$, ..., $L_{16}$, respectively, to generate corresponding autocorrelation values. These autocorrelation values can be represented by the dots labeled "P," "$E_1$," "$E_2$," ..., "$E_{16}$" "$L_1$," "$L_2$," ..., "$L_{16}$" in the plot 404, respectively.

The error estimating circuit 116 can determine a first time-shifted value of the first prompt C/A code P. In the example of plot 404, the first time-shifted value of the first prompt C/A code P is corresponding to or represented by the time value of (-2/16)C on the chip time axis. The error estimating circuit 116 can also find the maximum autocorrelation value among the generated autocorrelation values, and obtain a second time-shifted value of a shifted C/A code corresponding to the maximum autocorrelation value. The shifted C/A code corresponding to the maximum autocorrelation value can be referred to as a "second prompt C/A code." In the example of plot 404, the second prompt C/A code is the late C/A code $L_2$, and its second time-shifted value is corresponding to or represented by the time value of 0C on the chip time axis. According to the first time-shifted value, the second time-shifted value, and the autocorrelation values, the error estimating circuit 116 can calculate a pseudorange error of a satellite corresponding to the C/A codes P, $E_1$, $E_2$, ..., $E_{16}$, $L_1$, $L_2$, ..., $L_{16}$, e.g., a pseudorange error in a roughly calculated pseudorange from the satellite to the local GPS system.

More specifically, in an embodiment, C/A codes advanced relative to the second prompt C/A code (e.g., $L_2$) can be referred to as "early fitting C/A codes," and C/A codes delayed relative to the second prompt C/A code (e.g., $L_2$) can be referred to as "late fitting C/A codes." The error estimating circuit 116 can select one or more early fitting C/A codes (e.g., $L_1$, P, $E_1$, $E_2$, etc.) advanced relative to the second prompt C/A (e.g., $L_2$) and selects one or more late fitting C/A codes (e.g., $L_3$, $L_4$, $L_5$, $L_6$, etc.) delayed relative to the second prompt C/A code (e.g., $L_2$). According to the above mentioned second time-shifted value (e.g., represented by 0C), the maximum autocorrelation value corresponding to the second prompt C/A code (e.g., $L_2$), time-shifted values (e.g., represented by (-1/16)C, (-2/16)C, (-3/16)C, (-4/16)C, etc.) of the early fitting C/A codes (e.g., $L_1$, P, $E_1$, $E_2$, etc.), autocorrelation values corresponding to the early fitting C/A codes, time-shifted values (e.g., represented by (1/16)C, (2/16)C, (3/16)C, (4/16)C, etc.) of the late fitting C/A codes (e.g., $L_3$, $L_4$, $L_5$, $L_6$, etc.), and autocorrelation values corresponding to the late fitting C/A codes, the error estimating circuit 116 can calculate a set of parameters. These parameters indicate a relationship between the autocorrelation values and the time-shifted values, and determine a curvilinear function, e.g., a parabolic function.

In an embodiment, the error estimating circuit 116 selects one or more early fitting C/A codes and one or more late fitting C/A codes, wherein adjacent C/A codes of the selected early fitting C/A codes, the second prompt C/A code, and the selected late fitting C/A codes can have, but not necessarily, the same time span therebetween on the chip time axis in the plot 404. The time span between adjacent C/A codes of the selected early fitting C/A codes, the second prompt C/A code, and the selected late fitting C/A codes includes one or more local clock periods, e.g., one or more abovementioned sampling clock periods.

More specifically, as shown in plot 406, the error estimating circuit 116, taking the second time-shifted value (e.g., represented by 0C) as the origin of the chip time axis, selects two early fitting C/A codes (e.g., $L_1$ and P) on the left side of the origin of the chip time axis and two late fitting C/A codes (e.g., $L_3$ and $L_4$) on the right side of the origin of the chip time axis. Time-shifted values of the C/A codes P, $L_1$, $L_2$, $L_3$ and $L_4$ are represented by (-2/16)C, (-1/16)C, 0C, (1/16)C, and (2/16)C on the chip time axis of the plot 406. Autocorrelation values corresponding to the C/A codes P, $L_1$, $L_2$, $L_3$ and $L_4$ can be represented by $y_1$, $y_2$, $y_3$, $y_4$ and $y_5$, respectively. A quadratic function can be given by:

$$y = ax^2 + bx + c, \tag{1}$$

where the variable x represents a time-shifted value, the variable y represents an autocorrelation value, and the parameters a, b and c can determine the quadratic function.

The time-shifted values x and autocorrelation values y corresponding to the C/A codes P, $L_1$, $L_2$, $L_3$ and $L_4$ can be substituted into equation (1) to obtain the following set of equations (2).

$$\begin{cases} y_1 = a(-\frac{2}{16})^2 + b(-\frac{2}{16}) + c \\ \\ y_2 = a(-\frac{1}{16})^2 + b(-\frac{1}{16}) + c \\ \\ y_3 = a(0)^2 + b(0) + c \\ \\ y_4 = a(\frac{1}{16})^2 + b(\frac{1}{16}) + c \\ \\ y_5 = a(\frac{2}{16})^2 + b(\frac{2}{16}) + c \end{cases}$$

(2)

Equation (2) can be rewritten in a matrix form as the follows.

$$\begin{bmatrix} (-\frac{2}{16})^2 & (-\frac{2}{16}) & 1 \\ (-\frac{1}{16})^2 & (-\frac{1}{16}) & 1 \\ 0 & 0 & 1 \\ (\frac{1}{16})^2 & (\frac{1}{16}) & 1 \\ (\frac{2}{16})^2 & (\frac{2}{16}) & 1 \end{bmatrix} \begin{bmatrix} a \\ b \\ c \end{bmatrix} = \begin{bmatrix} y_1 \\ y_2 \\ y_3 \\ y_4 \\ y_5 \end{bmatrix}$$

(3)

Equation (3) can be rewritten as the follows.

$$\begin{bmatrix} a \\ b \\ c \end{bmatrix} = \begin{bmatrix} (-\frac{2}{16})^2 & (-\frac{2}{16}) & 1 \\ (-\frac{1}{16})^2 & (-\frac{1}{16}) & 1 \\ 0 & 0 & 1 \\ (\frac{1}{16})^2 & (\frac{1}{16}) & 1 \\ (\frac{2}{16})^2 & (\frac{2}{16}) & 1 \end{bmatrix}^{-1} \begin{bmatrix} y_1 \\ y_2 \\ y_3 \\ y_4 \\ y_5 \end{bmatrix}$$

(4)

The parameters a, b and c of the quadratic function (1) can be given as the follows.

a = 18.2857142857143($2y_1$-$y_2$-$2y_3$-$y_4$+$2y_5$)
b = -1.6($2y_1$+$y_2$-$y_4$-$2y_5$)
c = -0.0285714285714286($3y_1$-$12y_2$-$17y_3$-$12y_4$-+$3y_5$)

Thus, according to the presented calculation method, a quadratic function that indicates a relationship between autocorrelation values and time values in the chip time axis can be obtained.

In addition, the error estimating circuit 116 calculates a time-shifted value corresponding to a maximum value of the quadratic function. For example, a maximum value of the quadratic function, e.g., $-b/2a$, can be obtained by differentiating the quadratic function and setting the derivative of the quadratic function to zero. The time-shifted value corresponding to the maximum value can be calculated to be $0.7(2y_1+y_2-y_4-2y_5)/(2y_1-y_2-2y_3-y_4+2y_5)$. Taking plot 406 as an example, the calculated time-shifted value corresponding to the maximum value of the quadratic function is -0.12C. Moreover, the error estimating circuit 116 calculates a time difference 106 between the calculated time-shifted value (e.g., represented by -0.12C) corresponding to the maximum value and the above mentioned first time-shifted value (e.g., represented by (-2/16)C) of the first prompt C/A code P.

More specifically, in an embodiment, the error estimating circuit 116 calculates a first time difference between the above mentioned second time-shifted value (e.g., represented by 0C in the plot 404) and the above mentioned first time-shifted value (e.g., represented by (-2/16)C in the plot 404). In the example of plot 404, the first time difference is (2/16)C. The error estimating circuit 116 also calculates a second time difference between the calculated time-shifted value (e.g., represented by -0.12C in plot 406) and the second time-shifted value (e.g., represented by 0C in the plot 406). In the example of plot 406, the second time difference is - 0.12C. The error estimating circuit 116 adds the first time difference and the second time difference to obtain a time difference $\Delta T$ (e.g., $\Delta T = (2/16)C-0.12C$). As mentioned above, in an embodiment, a chip time unit can be approximately $1 \times 10^{-6}/1.23$ seconds. Thus, in the example of FIG. 4, the time difference $\Delta T$ is approximately equal to $[((2/16)-0.12)\times 10^{-6}/1.23]$ seconds. The calculated time difference $\Delta T$ can represent a pseudorange error.

The pseudorange calculating system 104 in FIG. 1 can multiply the time difference $\Delta T$ with a GPS signal's travel speed to calculate a pseudorange error, and eliminate the pseudorange error from a roughly calculated pseudorange to obtain a calibrated pseudorange. Hence, whether an RF (radio frequency) front end of the local GPS system has a wider bandwidth or a narrower bandwidth, the pseudorange measuring device 100 can calculate a pseudorange error, so as to enhance the accuracy of the pseudorange calculation. Additionally, the number of C/A codes used for the autocorrelation function calculation to calculate the pseudorange error can be relatively small (e.g., less than or equal to 33). Thus, the error estimating system 110 can calculate the pseudorange error relatively fast to increase a calculation speed for the pseudorange.

In operation in an embodiment, the autocorrelation value generating circuit 112 receives an IF signal 102 and extracts If signal data from it. The autocorrelation value generating circuit 112 also obtains a first prompt C/A code P by tracking the IF signal 102, and generates a set of early C/A codes $E_1, E_2, ..., E_{N1}$ advanced relative to the first prompt C/A code P and a set of late C/A codes $L_1, L_2, ..., L_{N2}$ delayed relative to the first prompt C/A code P. The autocorrelation value generating circuit 112 further calculates autocorrelation values of these C/A codes and the IF signal data. The error estimating circuit 116 finds a second prompt C/A code corresponding to a maximum autocorrelation value among the calculated autocorrelation values, and calculates a first time difference between the second prompt C/A code and the first prompt C/A code. The error estimating circuit 116 also performs curve fitting to create a relationship curve of the autocorrelation values and time values on a chip time axis using the C/A codes $P, E_1, E_2, ..., E_{N1}, L_1, L_2, ..., L_{N2}$, calculates a time-shifted value corresponding to a maximum value of the relationship curve, and calculates a second time difference between the calculated time-shifted value and a second time-shifted value of the second prompt C/A code. The error estimating circuit 116 further adds the first time difference and the second time difference to obtain a time difference 106 indicative of a pseudorange error, and provides the time difference 106 to the pseudorange calculating system 104. The pseudorange calculating system 104, thus, can calculate the pseudorange error according to the time difference 106, and calibrate a roughly calculated pseudorange.

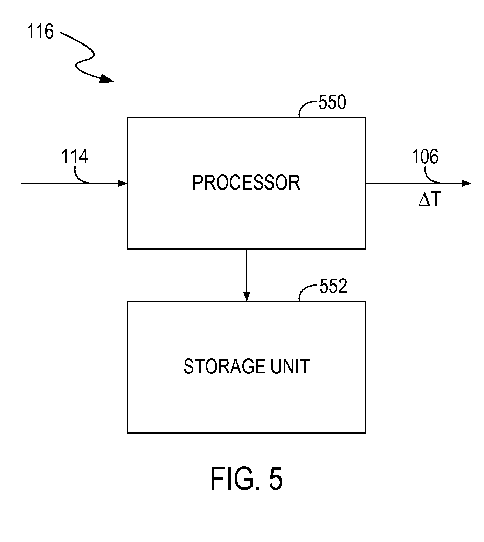

FIG. 5 illustrates a block diagram of an example of the error estimating circuit 116, in accordance with one embodiment of the present teaching. FIG. 5 is described in combination with FIG. 1, FIG. 2, FIG. 3, and FIG. 4. As shown in FIG. 5, the error estimating circuit 116 includes a processor 550 and a storage unit 552. The processor 550 can be, but not necessarily, a microcontroller ($\mu$C), microprocessor ($\mu$P), or the like. The storage unit 552 can be non-transitory computer-readable storage medium used for storing computer-readable instructions. In an embodiment, computer-readable instructions in the storage unit 552, when executed by the processor 550, can cause the processor 550 to perform the abovementioned operations of the error estimating circuit 116, e.g., including finding a second prompt C/A code corresponding to a maximum autocorrelation value, calculating a time difference between the second prompt C/A code and the first prompt C/A code, performing curve fitting, calculating a time difference indicative of a pseudorange error, etc.

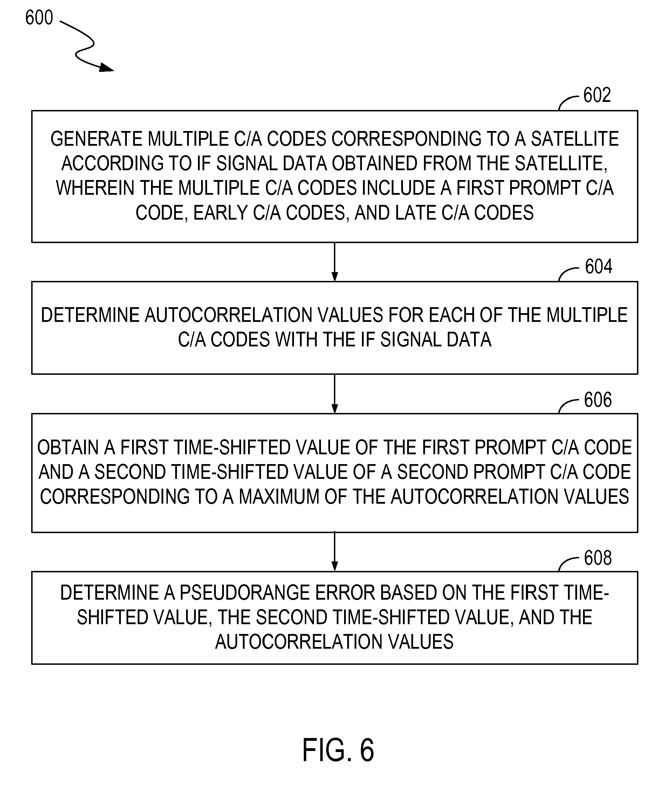

FIG. 6 illustrates a flowchart 600 of examples of operations performed by a pseudorange error estimating system, in accordance with one embodiment of the present teaching. Although specific steps are disclosed in FIG. 6, such steps are examples. That is, the present teaching is well suited to performing various other steps or variations of the steps recited in FIG. 6. FIG. 6 is described in combination with FIG. 1, FIG. 2, FIG. 3, FIG. 4, and FIG. 5.

At step 602, the autocorrelation value generating circuit 112 generates multiple C/A codes corresponding to a satellite of multiple satellites according to IF signal data obtained from the satellites. The multiple C/A codes includes a first prompt C/A code P, a set of early C/A codes $E_1$, $E_2$, ..., $E_{N1}$ advanced relative to the first prompt C/A code P, and a set of late C/A codes $L_1$, $L_2$, ..., $L_{N2}$ delayed relative to the first prompt C/A code P.

At step 604, the autocorrelation value generating circuit 112 performs autocorrelation function calculation on the C/A codes P, $E_1$, $E_2$, ..., $E_{N1}$, $L_1$, $L_2$, ..., $L_{N2}$ with the IF signal data to generate a set of autocorrelation values 114.

At step 606, the error estimating circuit 116 obtains a first time-shifted value (e.g., represented by (-2/16)C in the plot 404) of the first prompt C/A code P and a second time-shifted value (e.g., represented by 0C in the plot 404) of a second prompt C/A code (e.g., $L_2$ in the plot 404) that is corresponding to a maximum autocorrelation value among the autocorrelation values 114.

At step 606, the error estimating circuit 116 calculates a pseudorange error from the satellite to a local GPS system according to the first time-shifted value, the second time-shifted value, and the autocorrelation values. Taking the plots 404 and 406 in FIG. 4 for example, the error estimating circuit 116 calculates a difference between the second time-shifted value (e.g., represented by 0C in the plot 404) and the first time-shifted value (e.g., represented by (-2/16)C in the plot 404) to obtain a first time difference of, e.g., (2/16)C. The error estimating circuit 116 also calculates a time-shifted value corresponding to a maximum value of a quadratic function according to the above mentioned autocorrelation values $y_1$, $y_2$, $y_3$, $y_4$ and $y_5$, and calculates a difference between the calculated time-shifted value (e.g., represented by -0.12C in plot 406) and the second time-shifted value (e.g., represented by 0C in the plot 406) to obtain a second time difference of, e.g., -0.12C. Thus, the error estimating circuit 116 can obtain a time difference of, e.g., (2/16)C-0.12C, indicative of a pseudorange error, by adding the first time difference and the second time difference. In one embodiment, the error estimating circuit 116 further calculates/estimates the pseudorange error by multiplying the time difference with a travel speed of GPS signal from the satellite to the local GPS system, e.g., a speed of light or a speed determined by the speed of light and associated factors such as aerosphere, koniology, and air humidity. However, the present teaching is not so limited. In another embodiment, the error estimating circuit 116 provides the value of the time difference to a processor or controller, and the processor or controller performs the calculation/estimation for the pseudorange error.

In summary, embodiments according to the present teaching provide a system and method for estimating a pseudorange error and eliminating the pseudorange error for a pseudorange measuring device. The system and method can enhance an accuracy of pseudorange calculation for the pseudorange measuring device, and increase a calculation speed for the pseudorange. The systems and method can also simplify the structure of the pseudorange measuring device and reduce the cost thereof. The system and method according to the present teaching can be used in communicating and positioning for various GPS systems.

While the foregoing description and drawings represent embodiments of the present teaching, it will be understood that various additions, modifications and substitutions may be made therein without departing from the spirit and scope of the principles of the present teaching as defined in the accompanying claims. One skilled in the art will appreciate that the teaching may be used with many modifications of form, structure, arrangement, proportions, materials, elements, and components and otherwise, used in the practice of the teaching, which are particularly adapted to specific environments and operative requirements without departing from the principles of the present teaching. The presently disclosed embodiments are therefore to be considered in all respects as illustrative and not restrictive, the scope of the teaching being indicated by the appended claims and their legal equivalents, and not limited to the foregoing description.

**Claims**

1.  A method for estimating a pseudorange error, the method comprising:

    generating a plurality of coarse/acquisition (C/A) codes, including a first prompt C/A code corresponding to a satellite according to intermediate frequency (IF) signal data obtained from the satellite;
    determining autocorrelation values for each of the plurality of C/A codes with the IF signal data;
    obtaining a second prompt C/A code corresponding to a maximum of the autocorrelation values; and
    determining a pseudorange error based on the first prompt C/A code, the second prompt C/A code, and the autocorrelation values.

2.  The method as claimed in claim 1, further comprising:

    obtaining a first time-shifted value of the first prompt C/A code and a second time-shifted value of the second prompt C/A code;
    determining a pseudorange error based on the first time-shifted value, the second time-shifted value, and the autocorrelation values.

3. The method as claimed in one of claims 1 or 2, further comprising:

   determining the first prompt C/A code using a loop tracking module.

4. The method as claimed in one of claims 1 to 3, wherein a time span between adjacent C/A codes of the plurality of C/A codes comprises at least one clock period.

5. The method as claimed in one of claims 1 to 4, wherein the plurality of C/A codes comprise the first prompt C/A code, a set of early C/A codes advanced relative to the first prompt C/A code, and a set of late C/A codes delayed relative to the first prompt C/A code.

6. The method as claimed in one of claims 2 to 5, wherein determining the pseudorange error comprises:

   selecting, from the plurality of C/A codes, at least one early fitting C/A code advanced relative to the second prompt C/A code and at least one late fitting C/A code delayed relative to the second prompt C/A code;
   obtaining a plurality of parameters based on the second time-shifted value, the maximum of the autocorrelation values, a time-shifted value of the at least one early fitting C/A code, an autocorrelation value corresponding to the at least one early fitting C/A code, a time-shifted value of the at least one late fitting C/A code, and an autocorrelation value corresponding to the at least one late fitting C/A code, wherein the parameters indicate a relationship between an autocorrelation value and a time-shifted value;
   obtaining a calculated time-shifted value, corresponding to a maximum value of a curvilinear function that is determined by the parameters; and
   determining the pseudorange error based on a time difference between the calculated time-shifted value and the first time-shifted value.

7. The method as claimed in claim 6, wherein a time span between adjacent C/A codes of the at least one early fitting C/A code, the second prompt C/A code, and the at least one late fitting C/A codes comprises at least one clock period.

8. The method as claimed in one of claims 6 or 7, wherein the curvilinear function comprises a parabolic function.

9. The method as claimed in one of claims 6 to 8, wherein adjacent C/A codes of the at least one early fitting C/A code, the second prompt C/A code, and the at least one late fitting C/A code have the same time span therebetween.

10. The method as claimed in one of claims 6 to 9, wherein the time difference is determined by:

    calculating a first time difference between the second time-shifted value and the first time-shifted value;
    calculating a second time difference between the calculated time-shifted value and the second time-shifted value; and
    adding the first time difference and the second time difference to obtain the time difference indicative of the pseudorange error.

11. A pseudorange error estimating system comprising:

    an autocorrelation value generating circuit operable for
    generating a plurality of coarse/acquisition (C/A) codes, including a first prompt C/A code corresponding to a satellite according to intermediate frequency (IF) signal data obtained from the satellite, and
    determining autocorrelation values for each of the plurality of C/A codes with the IF signal data; and
    an error estimating circuit, coupled to the autocorrelation value generating circuit, operable for
    obtaining the first prompt C/A code and a second prompt C/A code that is corresponding to a maximum of the autocorrelation values, and
    determining a pseudorange error based on the first prompt C/A code, the second prompt C/A code, and the autocorrelation values.

12. The pseudorange error estimating system as claimed in claim 11, wherein the error estimating circuit is operable for obtaining a first time-shifted value of the first prompt C/A code and a second time-shifted value of the second prompt C/A code, and
    determining a pseudorange error base on the first time-shifted value, the second time-shifted value, and the autocorrelation values.

13. The pseudorange error estimating system as claimed in one of claims 11 or 12, wherein the autocorrelation value generating circuit performs autocorrelation function calculation on the plurality of C/A codes with the same IF signal data to generate the autocorrelation values.

14. The pseudorange error estimating system as claimed in one of claims 11 to 13, further comprising a loop tracking module operable for determining the first prompt C/A code.

15. The pseudorange error estimating system as claimed in one of claims 11 to 14, wherein a time span between adjacent C/A codes of the plurality of C/A codes comprises at least one clock period.

16. The pseudorange error estimating system as claimed in one of claims 12 to 15, wherein the error estimating circuit is further operable for:

selecting, from the plurality of C/A codes, at least one early fitting C/A code advanced relative to the second prompt C/A code and at least one late fitting C/A code delayed relative to the second prompt C/A code;
obtaining a plurality of parameters based on the second time-shifted value, the maximum of the autocorrelation values, a time-shifted value of the at least one early fitting C/A code, an autocorrelation value corresponding to the at least one early fitting C/A code, a time-shifted value of the at least one late C/A code, and an autocorrelation value corresponding to the at least one late fitting C/A code, wherein the parameters indicate a relationship between an autocorrelation value and a time-shifted value;
obtaining a calculated time-shifted value, corresponding to a maximum value of a curvilinear function that is determined by the parameters; and
determining the pseudorange error based on a time difference between the calculated time-shifted value and the first time-shifted value.

17. The pseudorange error estimating system as claimed in claim 16, wherein the error estimating circuit is further operable for:

calculating a first time difference between the second time-shifted and the first time-shifted value;
calculating a second time difference between the calculated time-shifted and the second time-shifted value; and
adding the first time difference and the second time difference to obtain the time difference indicative of the pseudorange error.

18. A pseudorange measuring device comprising:

an error estimating system as claimed in one of claims 11 to 17 and
a pseudorange calculating system, coupled to the error estimating system, operable for
calculating a rough value of a pseudorange, and
eliminating the pseudorange error from the rough value of the pseudorange to obtain a calibrated value of the pseudorange.

100

110

112

116

104

102
IF

AUTOCORRELATION
VALUE
GENERATING
CIRCUIT

114

ERROR
ESTIMATING
CIRCUIT

106
ΔT

PSEUDO
RANGE
CALCULATING
SYSTEM

108

FIG. 1

FIG. 2

IF signal data: D1 | D2 | ... | D1022 | D1023
prompt C/A code P: C1 | C2 | C1022 | C1023

IF signal data: D1 | D2 | D1022 | D1023
early C/A code $E_1$: C1 | C2 | C1022 | C1023

IF signal data: D1 | D2 | D1022 | D1023
early C/A code $E_2$: C1 | C2 | C1022 | C1023

IF signal data: D1 | D2 | D1022 | D1023
early C/A code $E_{16}$: C1 | C2 | C3 | C1023 | C1

IF signal data: D1 | D2 | D1022 | D1023
late C/A code $L_1$: C1 | C2 | C1022 | C1023

IF signal data: D1 | D2 | D1022 | D1023
late C/A code $L_2$: C1 | C2 | C1022 | C1023

IF signal data: D1 | D2 | D1022 | D1023
late C/A code $L_{16}$: C1023 | C1 | C1021 | C1022 | C1023

FIG. 3

FIG. 4

116

550

114

PROCESSOR

106

$\Delta T$

552

STORAGE UNIT

FIG. 5

600

**602**

GENERATE MULTIPLE C/A CODES CORRESPONDING TO A SATELLITE ACCORDING TO IF SIGNAL DATA OBTAINED FROM THE SATELLITE, WHEREIN THE MULTIPLE C/A CODES INCLUDE A FIRST PROMPT C/A CODE, EARLY C/A CODES, AND LATE C/A CODES

**604**

DETERMINE AUTOCORRELATION VALUES FOR EACH OF THE MULTIPLE C/A CODES WITH THE IF SIGNAL DATA

**606**

OBTAIN A FIRST TIME-SHIFTED VALUE OF THE FIRST PROMPT C/A CODE AND A SECOND TIME-SHIFTED VALUE OF A SECOND PROMPT C/A CODE CORRESPONDING TO A MAXIMUM OF THE AUTOCORRELATION VALUES

**608**

DETERMINE A PSEUDORANGE ERROR BASED ON THE FIRST TIME-SHIFTED VALUE, THE SECOND TIME-SHIFTED VALUE, AND THE AUTOCORRELATION VALUES

FIG. 6

Europäisches
Patentamt

European
Patent Office

Office européen
des brevets

**EUROPEAN SEARCH REPORT**

Application Number

EP 14 16 7701

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2009/115899 A2 (TOYOTA MOTOR CO LTD [JP]; HASEGAWA NAOTO [JP]; TAMPO HIDEAKI [JP]) 24 September 2009 (2009-09-24) <br> * paragraphs [0004] - [0008] * <br> * paragraphs [0032] - [0040] * <br> ----- | 1-18 | INV. <br> G01S19/40 <br> G01S19/22 <br><br> ADD. <br> G01S19/23 |
| A | US 2011/156954 A1 (ROH JUNE CHUL [US] ET AL) 30 June 2011 (2011-06-30) <br> * paragraphs [0021] - [0025] * <br> * paragraphs [0052] - [0062] * <br> * paragraphs [0078] - [0081] * <br> ----- | 1-18 | |
| A | US 2002/111739 A1 (JANDRELL LOUIS H M [US]) 15 August 2002 (2002-08-15) <br> * paragraphs [0018] - [0020] * <br> * paragraphs [0101] - [0119] * <br> ----- | 1-18 | |
| A | US 7 064 709 B1 (WEISENBURGER SHAWN [CA] ET AL) 20 June 2006 (2006-06-20) <br> * column 1, line 55 - column 2, line 22 * <br> * column 3, line 3 - column 4, line 39 * <br> ----- | 1-18 | |
| | | | TECHNICAL FIELDS SEARCHED (IPC) <br><br> G01S |

The present search report has been drawn up for all claims

| Place of search | Date of completion of the search | Examiner |
|---|---|---|
| The Hague | 10 September 2014 | Naddeo, Giovanni |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 14 16 7701

This annex lists the patent family members relating to the patent documents cited in the above-mentioned European search report.
The members are as contained in the European Patent Office EDP file on
The European Patent Office is in no way liable for these particulars which are merely given for the purpose of information.

10-09-2014

| Patent document cited in search report | | Publication date | Patent family member(s) | | Publication date |
|---|---|---|---|---|---|
| WO 2009115899 | A2 | 24-09-2009 | JP 2009229065 A<br>WO 2009115899 A2 | | 08-10-2009<br>24-09-2009 |
| US 2011156954 | A1 | 30-06-2011 | NONE | | |
| US 2002111739 | A1 | 15-08-2002 | AU 8546601 A<br>US 6331836 B1<br>US 2002111739 A1<br>US 2003128158 A1<br>WO 0216961 A2 | | 04-03-2002<br>18-12-2001<br>15-08-2002<br>10-07-2003<br>28-02-2002 |
| US 7064709 | B1 | 20-06-2006 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201310199808